# EUROPEAN PATENT APPLICATION

(11) **EP 4 258 133 A1**
(43) Date of publication of application: **11.10.2023**
(21) Application number: 21913493.9
(22) Date of filing: 10.11.2021
(51) Int. Cl.: G06F 16/957, H04N 21/431

(54) **TUTORIAL-BASED MULTIMEDIA RESOURCE EDITING METHOD AND APPARATUS, DEVICE, AND STORAGE MEDIUM**

(30) Priority: 29.12.2020 CN 202011598483
(71) Applicant: Beijing Zitiao Network Technology Co., Ltd., Beijing 100190 (CN)
(72) Inventor: HE, Jiayi, Beijing 100190 (CN)
(74) Representative: Dentons UK and Middle East LLP
(86) International application number: PCT/CN2021/129742
(87) International publication number: WO 2022/142750

(57) **Abstract**

The present invention provides a tutorial-based multimedia resource editing method and apparatus, a device, and a storage medium. The method comprises: first obtaining a tutorial video; and then playing back the tutorial video on a resource editing page in the form of a floating window, the tutorial video being used for instructing a user to edit an imported multimedia resource on the resource editing page. Therefore, according to the present invention, it is possible to use only one device to realize the function of learning multimedia resource editing while watching a tutorial video, thereby reducing occupation of device resources.

## Description

The present application claims priority to Chinese Patent Application No. 202011598483.1, titled "METHOD AND APPARATUS FOR ONLINE STREAMING INTERACTION, ELECTRONIC DEVICE, AND STORAGE MEDIUM", filed with the China National Intellectual Property Administration on December 29, 2020, which is incorporated herein by reference in its entirety.

### FIELD

The present disclosure relates to the field of data processing, and in particular to a method and apparatus for editing multimedia resource based on a tutorial, a device, and a storage medium

### BACKGROUND

With the rapid development of various technical fields, learning new knowledge and new technologies has become a daily routine for individuals. A common learning method to learn is to watch the tutorials. For example, video editing techniques can be learned by watching video editing tutorials, and image processing techniques can be learn by watching image processing tutorials.

In an actual learning process, the user opens the relevant operating software and learns the operation while watching the tutorial. Therefore, usually the user needs to use one device to play the tutorial while using another device to learn the operation, which is obviously a waste of device resources.

### SUMMARY

In order to solve or at least partly solve the above technical problems, a method and apparatus for editing multimedia resource based on a tutorial, a device, and a storage medium are provided according to the present disclosure, which can realize a function of learning multimedia resource editing operations while watching tutorials via one device, so as to reduce the occupation of device resources.

In a first aspect, a method for editing multimedia resource based on a tutorial is provided according to the present disclosure. The method includes:
acquiring a tutorial video; and
playing the tutorial video on a resource editing page in a form of a floating window; where the tutorial video is used to instruct a user to perform an editing operation on an imported multimedia resource on the resource editing page.

In an optional implementation, before the playing the tutorial video on the resource editing page in the form of the floating window, the method further includes:
jumping from a tutorial playing page to the resource editing page, in response to a trigger operation for an editing entry on the tutorial playing page.

In an optional implementation, before the jumping from the tutorial playing page to the resource editing page, the method further includes:
displaying a material source selection window, in response to the trigger operation for the editing entry on the tutorial playing page;
downloading a first material associated with the tutorial video, in a case that a selection operation for a tutorial-associated material on the material source selection window is received, and importing the first material into the resource editing page; and
importing a second material selected from user personal resource into the resource editing page, in a case that a selection operation for user personal resource on the material source selection window is received.

In an optional implementation, before the jumping from the tutorial playing page to the resource editing page, the method further includes:
jumping from the tutorial playing page to a display page of user personal resource, in response to the trigger operation for the editing entry on the tutorial playing page; and
importing at least one material into the resource editing page, in response to a selection operation for the at least one material on the display page of user personal resource.

In an optional implementation, after the playing the tutorial video on the resource editing page in the form of the floating window, the method further includes:
zooming in on the floating window on the resource editing page in response to a zoom-in operation for the floating window or zooming out on the floating window on the resource editing page in response to a zoom-out operation for the floating window; or
displaying the floating window in a preset area corresponding to a dragging direction of the dragging operation on the resource editing page, in response to a dragging operation for the floating window; where the preset area is independent from a display area of an editing control on the resource editing page.

In an optional implementation, the tutorial video includes a first video clip and a second video clip adjacent to each other, and the method further includes:
detecting whether an editing operation indicated by the first video clip is completed on the resource editing page, in a process of playing the first video clip; and
triggering a play of the second video clip, in response to detecting that the editing operation indicated by the first video clip has been completed on the resource editing page.

In an optional implementation, the detecting whether the editing operation indicated by the first video clip is completed on the resource editing page, in the process of playing the first video clip further includes:
detecting whether a preset operation in the editing operation indicated by the first video clip is completed on the resource editing page, in the process of playing the first video clip.

In an optional implementation, after the playing the tutorial video on the resource editing page in the form of the floating window, the method further includes:
displaying a processing result corresponding to the multimedia resource in a user draft list, in response to an editing completion operation for the multimedia resource on the resource editing page, where the processing result carries a tutorial identifier, and the tutorial identifier is used to indicate that the processing result is generated based on a tutorial video.

In a second aspect, an apparatus for editing multimedia resource based on a tutorial is provided according to the present disclosure. The apparatus includes: an acquisition module and a playing module.

The acquisition module is configured to acquire a tutorial video.

The playing module is configured to play the tutorial video on a resource editing page in a form of a floating window; where the tutorial video is used to instruct a user to perform an editing operation on an imported multimedia resource on the resource editing page.

In a third aspect, a computer readable storage medium is provided according to the present disclosure, and instructions are stored in the computer readable storage medium, where the instructions when executed by a terminal device, cause the terminal device to implement the above method.

In a fourth aspect, a device is provided according to the present disclosure, the device includes: a memory; a processor; and a computer program stored in the memory and executable on the processor. When the computer program executed by the processor, the processor implements the above method.

Compared with the conventional technology, the technical solutions provided by embodiments of the present disclosure have the following advantages.

With the method for editing the multimedia resource based on the tutorial according to the present disclosure, the tutorial video is acquired first and then is played on the resource editing page in the form of the floating window, which can instruct a user to perform an editing operation on an imported multimedia resource on the resource editing page. In this way, the function of learning multimedia resource editing while watching the tutorial video on only one device can be achieved in the embodiments of the present disclosure, which can reduce the occupation of device resources.

### BRIEF DESCRIPTION OF THE DRAWINGS

The drawings herein are incorporated into the specification and constitute a part of the specification, which show embodiments which comply with the present disclosure. The drawings and the specification are used as a whole to explain the principle of the present disclosure.

In order to more clearly illustrate the embodiments of the present disclosure or the technical solutions in the conventional technology, the drawings used in the description of the embodiments or the conventional technology are briefly introduced below. It is apparent that, for those skilled in the art, other drawings can be obtained according to the provided drawings without any creative effort.
Figure 1 is a flow chart of a method for editing multimedia resource based on a tutorial according to an embodiment of the present disclosure;
Figure 2 is a schematic effect diagram of an audio and video editing page according to an embodiment of the present disclosure;
Figure 3 is a schematic effect diagram of jumping from a tutorial playing page to a resource editing page according to an embodiment of the present disclosure;
Figure 4 is a schematic effect diagram of displaying a material source selection window after an editing entry is triggered according to an embodiment of the present disclosure;
Figure 5 is a schematic diagram of an audio and video editing page according to an embodiment of the present disclosure;
Figure 6 is a schematic structural diagram of an apparatus for editing multimedia resource based on a tutorial according to an embodiment of the present disclosure; and
Figure 7 is a schematic structural diagram of a device for editing multimedia resource based on a tutorial according to an embodiment of the present disclosure.

### DETAILED DESCRIPTION OF EMBODIMENTS

In order to understand the above purposes, features, and advantage of the present disclosure more clearly, the technical solutions according to the present disclosure will be further described. It should be noted that the embodiments of the present disclosure and the features in the embodiments may be combined with each other if there is no conflict.

In the following description, numerous specific details are set forth in order to provide thorough understanding of the present disclosure. However, the present disclosure may also be implemented in other ways different from those described here. Obviously, the embodiments in the specification are only a part of the embodiments of the present disclosure, rather than all the embodiments.

A common method for learning the multimedia resource editing is to watch the tutorials to learn the editing method for multimedia resources. However, in the existing technology, at least two devices are required to complete the function of learning multimedia resources editing while watching tutorials. Specifically, one device is used to play the tutorial video, and another device is used to open editing software of the multimedia resource. In this way, the user may operate the editing software of the multimedia resource while watching the tutorial video to finally achieve the purpose of learning multimedia resource editing via the tutorial video.

In order to reduce the waste of device resources, a method for editing multimedia resource based on a tutorial is provided according to the present disclosure. Firstly, the tutorial video is acquired, and then the tutorial video is played on a resource editing page in a form of a floating window. The tutorial video is used to instruct a user to perform an editing operation on an imported multimedia resource on the resource editing page. In this way, only one device is used to play the tutorial video and edit multimedia resources, which can reduce the occupation of device resources.

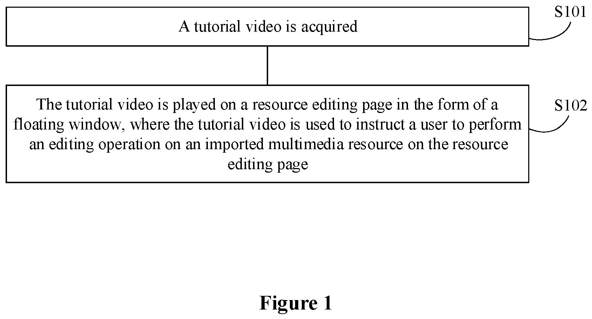

Based on this, a method for editing multimedia resource based on a tutorial is provided according to an embodiment of the present disclosure. Referring to Figure 1, Figure 1 illustrates a flow chart of a method for editing multimedia resource based on a tutorial according to an embodiment of the present disclosure. The method includes steps S101 and S102 as follows.

In S101, a tutorial video is acquired.

In an embodiment of the present disclosure, the tutorial video refers to display an editing process for a certain effect of a multimedia resource in a form of a video, and the purpose of which is to guide the user to learn.

The tutorial video may include a tutorial video for audio and video editing, a tutorial video for image effect processing, and the like.

In S 102, the tutorial video is played on a resource editing page in a form of a floating window, where the tutorial video is used to instruct a user to perform an editing operation on an imported multimedia resource on the resource editing page.

In an embodiment of the present disclosure, the resource editing page may be an audio and video editing operation page, an image effect processing page and the like.

In practical application, the acquired tutorial video is played on the resource editing page in the form of the floating window. Thus, the user can learn to edit the imported multimedia resource on the resource editing page through the tutorial video being played. The multimedia resource may include image resource, audio and video resource and the like.

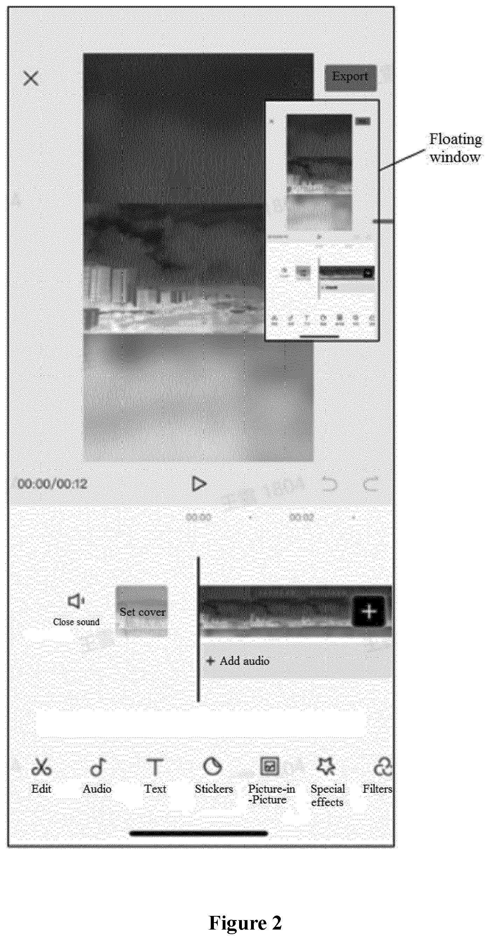

Taking the audio and video editing page as an example, Figure 2 illustrates a schematic effect diagram of an audio and video editing page according to an embodiment of the present disclosure. As shown in Figure 2, the tutorial video is played on the audio and video editing page in the form of the floating window. The user may perform an editing operation on the imported audio and video resource on the audio and video editing page, based on the tutorial video in the process of playing the tutorial video. In this way, the function of learning the audio and video editing while watching the tutorial video on one device can be achieved.

In the method for editing the multimedia resource based on the tutorial according to the present disclosure, the tutorial video is played on the resource editing page in the form of the floating window, which can instruct a user to perform an editing operation on an imported multimedia resource on the resource editing page. In this way, the function of learning the multimedia resource editing while watching the tutorial video on only one device can be achieved in the embodiment of the present disclosure, which can reduce the occupation of device resources.

On the basis of the above embodiments, a method for editing multimedia resource based on a tutorial is further provided according to the present disclosure. In an embodiment, before the tutorial video is played on the resource editing page in the form of the floating window, after a trigger operation for an editing entry on a tutorial playing page is received, a jump from the tutorial playing page to the resource editing page is performed and the tutorial video played on the tutorial playing page is acquired to play the tutorial video on the resource editing page in the form of the floating window, thereby instructing the user to perform an editing operation on an imported multimedia resource on the resource editing page.

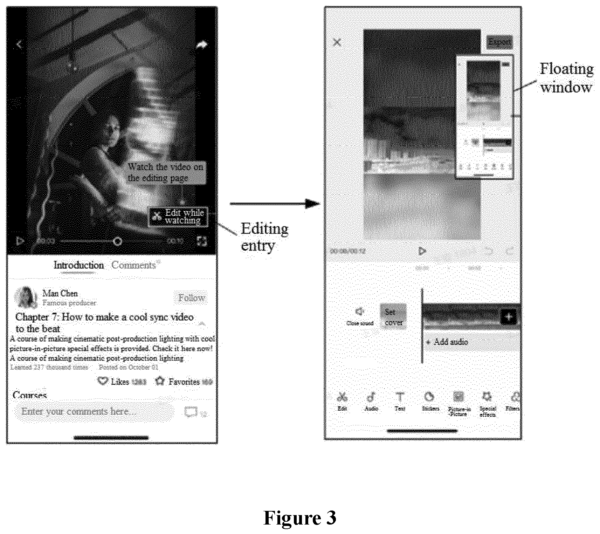

Figure 3 illustrates a schematic effect diagram of jumping from a tutorial playing page to a resource editing page according to an embodiment of the present disclosure. As shown in Figure 3, the editing entry is provided on the tutorial playing page. After the user clicks the editing entry, the jump from the tutorial playing page to the resource editing page corresponding to the editing entry is triggered, and the tutorial video played on the tutorial playing page is acquired to play the tutorial video on the resource editing page in the form of the floating window. The resource editing page can be understood with reference to the schematic effect diagram of the audio and video editing page shown in Figure 2.

In addition, a method for editing multimedia resource based on a tutorial is further provided according to an embodiment of the present disclosure. In the embodiment, a tutorial search box is provided on the resource editing page. The user can search for tutorial videos by inputting a keyword in the tutorial search box. Then, a tutorial video is selected from the searched tutorial videos and played on the resource editing page in the form of the floating window. Thus, user requirement of learning multimedia resource editing while watching the tutorial video on the same device is met.

It should be noted that this embodiment of the present disclosure does not limit the scenario of triggering the tutorial video played on the resource editing page in the form of the floating window.

In addition, in an embodiment of the present disclosure, before performing an editing operation on the resource editing page based on the tutorial video, the multimedia resource is imported on the resource editing page in advance.

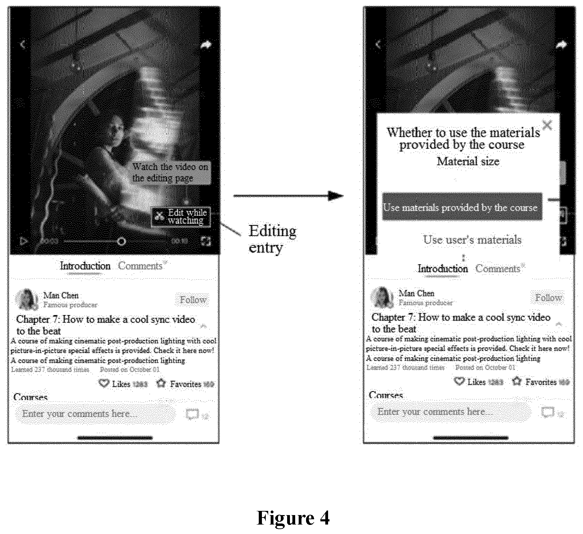

In an optional implementation, after receiving a trigger operation for an editing entry on the tutorial playing page, a material source selection window is first displayed. Figure 4 illustrates a schematic effect diagram of displaying a material source selection window after an editing entry is triggered according to an embodiment of the present disclosure. Referring to Figure 4, at least two types of material sources are displayed on the material source selection window, which includes "Use material provided by the course", i.e., tutorial-associated material, and "Use my own material", i.e., user personal resource. Specifically, the tutorial-associated material refers to multimedia resource carried in the imported tutorial video. The user personal resource refers to importing user personal multimedia resource.

In an optional implementation, the author of the tutorial video can associate materials with the tutorial before posting the tutorial. In an embodiment, multimedia resource can be selected from the personal resources of the author, and posted in association with the tutorial video. In this way, users who study the tutorial video can use the associated multimedia resource to perform the editing operation.

In an actual application, in response to the trigger operation for the editing entry on the tutorial playing page, a material source selection window is displayed. If a selection operation for tutorial-associated material on the material source selection window is received from the user, a first material associated with the tutorial video is downloaded, and the first material is imported into the material editing page. If a selection operation for user personal resources on the material source selection window is received from the user, a second material selected from the user personal resources is imported into the resource editing page. Specifically, after a selection operation for user personal resources on the material source selection window is received from the user, a jump from the tutorial playing page to a display page of the user personal resources is performed. The user can select at least one material to import to the resource editing page.

It should be noted that the first material and the second material imported into the resource editing page are used as objects for the user to perform the editing operation on the resource editing page.

In another optional implementation, after receiving the trigger operation for the editing entry on the tutorial playing page, the tutorial playing page can be directly jumped to the display page of the user personal resources. After the user selects at least one material on the display page of the user personal resources, the at least one material is imported into the resource editing page, which is used as a multimedia resource to be edited.

In another optional implementation, after receiving the trigger operation for the editing entry on the tutorial playing page, the first material associated with the tutorial video can be directly downloaded, and be imported into the resource editing page.

It should be noted that, the manner for importing the multimedia resource to the resource editing page will not be limited in the embodiments of the present disclosure specifically.

In an embodiment of the present disclosure, in the process of playing the tutorial video on the resource editing page in the form of the floating window, the user can perform some operations, such as zooming in on or zooming out on the floating window, to adjust the display of the floating window to meet the user requirements.

In an optional implementation manner, when a zoom-in operation on the floating window is received, the floating window is zoomed in on the resource editing page. When a zoom-out operation on the floating window is received, the floating window is zoomed out on the resource editing page.

In another optional implementation, the user can also drag the floating window to adjust the display position of the floating window. Specifically, once a dragging operation for the floating window is received, the floating window is displayed in a preset area corresponding to the dragging direction of the dragging operation on the resource editing page. The preset area is independent from an area where the editing control is displayed on the resource editing page.

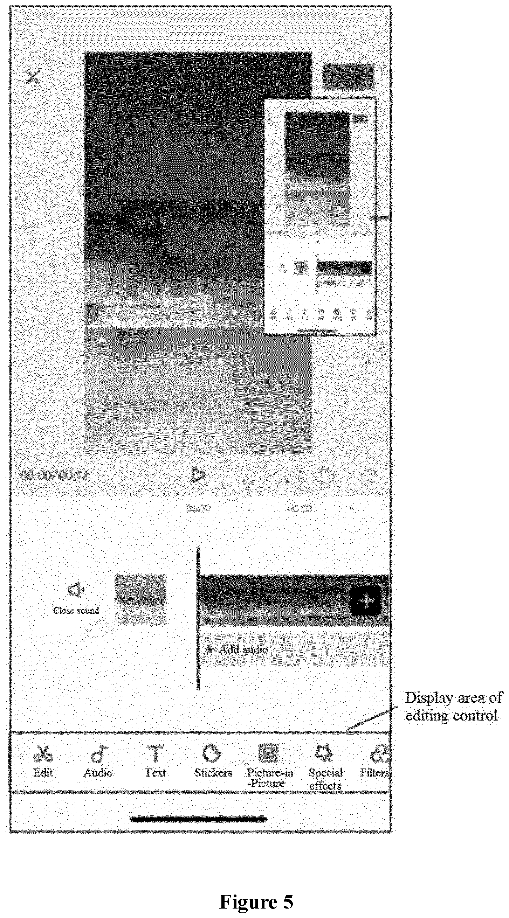

Figure 5 is taken as an example. Figure 5 is a schematic diagram of an audio and video editing page according to an embodiment of the present disclosure. When the floating window playing the tutorial video is dragged by the user, the dragged floating window cannot cover the display area of the editing control on the resource editing page, so as to ensure that the floating window does not interfere with the editing operation of the user on the imported multimedia resource on the resource editing page.

In an embodiment of the present disclosure, there are various implementations for performing the editing operation on the multimedia resource on the resource editing page based on the tutorial video played in the form of the floating window. An optional implementation of various implementations is provided according to an embodiment of the present disclosure.

In an embodiment, the tutorial video includes a first video clip and a second video clip adjacent to each other. In the process of playing the first video clip on the resource editing page in the form of the floating window, it is detected whether the editing operation indicated by the first video clip is completed on the resource editing page. As an example, the editing operation indicated by the first video clip include three editing operations in sequence, which are adding stickers, adding audio and adding special effects. Then, whether the above three editing operations indicated by the first video clip are completed on the resource editing page is detected, in the process of playing the first video clip. On detecting that the above three editing operations indicated by the first video clip have been completed on the resource editing page, the second video clip is played.

In an optional implementation, in the process of playing the first video clip, it is detected whether a preset operation in the editing operation indicated by the first video clip is completed on the resource editing page. For example, the preset operation may be the last operation in the editing operations indicated by the first video clip, such as the above operation of adding special effects. In this case, it is detected whether the above operation of adding special effects is completed on the resource editing page, in the process of playing the first video clip.

In addition, the preset operation may also be the first operation and the last operation in the editing operations indicated by the first video clip.

In addition, in an embodiment of the present disclosure, in response to receiving an editing completion operation for the multimedia resource on the resource editing page, a processing result corresponding to the multimedia resource is displayed in a user draft list. The processing result carries a tutorial identifier, and the tutorial identifier is used to indicate that the processing result is generated based on a tutorial video.

In practical applications, in the process of playing the tutorial video in the form of the floating window, the user processes the multimedia resource based on the tutorial video, to obtain a processing result. The processing result may be an edited video, an image after an effect operation and the like. After the user triggers the editing completion operation, the processing result of the user can be displayed in the user draft list. A tutorial identifier may be marked in the processing result, to indicate that the processing result is generated based on a tutorial video.

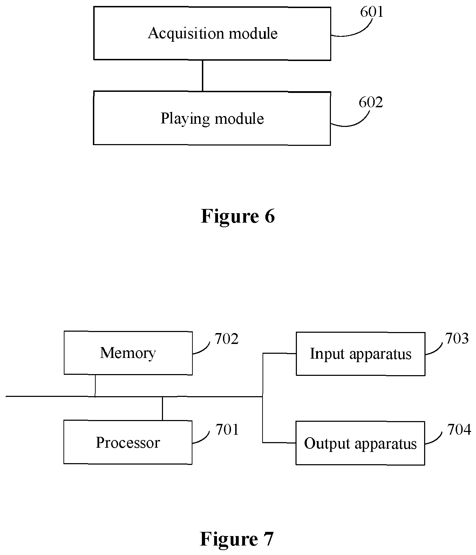

Based on the same inventive concept as the above method embodiment, an apparatus for editing multimedia resource based on a tutorial is further provided according to the present disclosure. Referring to Figure 6, Figure 6 is a schematic structural diagram of an apparatus for editing multimedia resource based on a tutorial according to an embodiment of the present disclosure. The apparatus includes: an acquisition module 601 and a playing module 602.

The acquisition module 601 is configured to acquire a tutorial video.

The playing module 602 is configured to play the tutorial video on a resource editing page in a form of a floating window, where the tutorial video is used to instruct a user to perform an editing operation on an imported multimedia resource on the resource editing page.

In an optional implementation, the apparatus further includes: a first jumping module configured to jump from a tutorial playing page to the resource editing page, in response to a trigger operation for an editing entry on the tutorial playing page.

In an optional implementation, the apparatus further includes: a first display module, a downloading module and a first importing module.

The first display module is configured to display a material source selection window, in response to the trigger operation for the editing entry on the tutorial playing page.

The downloading module is configured to download a first material associated with the tutorial video, in a case that a selection operation for a tutorial-associated material on the material source selection window is received, and import the first material into the resource editing page.

The first importing module is configured to import a second material selected from user personal resources into the resource editing page, in a case that a selection operation for user personal resource on the material source selection window is received.

In an optional implementation, the apparatus further includes: a second jumping module and a second importing module.

The second jumping module is configured to jump from the tutorial playing page to a display page of user personal resource, in response to the trigger operation for the editing entry on the tutorial playing page.

The second importing module is configured to import at least one material into the resource editing page, in response to a selection operation for the at least one material on the display page of user personal resource.

In an optional implementation, the apparatus further includes: a first display module or a second display module.

The first display module is configured to zoom in on the floating window on the resource editing page in response to a zoom-in operation for the floating window, or zoom out on the floating window on the resource editing page in response to a zoom-out operation for the floating window.

The second display module is configured to display the floating window in a preset area corresponding to a dragging direction of a dragging operation on the resource editing page, in response to the dragging operation for the floating window, where the preset area is independent from a display area of an editing control on the resource editing page.

In an optional implementation, the tutorial video includes a first video clip and a second video clip adjacent to each other, and the apparatus further includes: a detecting module and a triggering module.

The detecting module is configured to detect whether an editing operation indicated by the first video clip is completed on the resource editing page, in a process of playing the first video clip.

The triggering module is configured to trigger a play of the second video clip, in response to detecting that the editing operation indicated by the first video clip has been completed on the resource editing page.

In an optional implementation, the detecting module is further configured to detect whether a preset operation in the editing operation indicated by the first video clip is completed on the resource editing page, in the process of playing the first video clip.

In an optional implementation, the apparatus further includes: a second display module configured to display a processing result corresponding to the multimedia resource in a user draft list, in response to an editing completion operation for the multimedia resource on the resource editing page, where the processing result carries a tutorial identifier, and the tutorial identifier is configured to indicate that the processing result is generated based on a tutorial video.

In the apparatus for editing the multimedia resource based on the tutorial according to the embodiments of the present disclosure, the tutorial video is played on the resource editing page in the form of the floating window, so as to instruct the user to perform the editing operation on the imported multimedia resource on the resource editing page. Thus, the function of learning multimedia resource editing while watching the tutorial video on only one device can be achieved in the embodiments of the present disclosure, which can reduce the occupation of device resources.

In addition to the above methods and apparatuses, a computer readable storage medium is further provided according to an embodiment of the present disclosure. Instructions are stored in the computer readable storage medium. The instructions, when executed by a terminal device, cause the terminal device to implement the method for editing the multimedia resource based on the tutorial described in the embodiments of the present disclosure.

In addition, a device for editing multimedia resource based on a tutorial is further provided according to an embodiment of the present disclosure. Referring to Figure 7, the device for editing the multimedia resource based on the tutorial may include: a processor 701, a memory 702, an input apparatus 703 and an output apparatus 704.

The device for editing the multimedia resource based on the tutorial may include one or more processors 701. One processor is taken as an example in Figure 7. In some embodiments of the present disclosure, the processor 701, the memory 702, the input apparatus 703 and the output apparatus 704 may be connected through a bus or in other manner. In Figure 7, a connection through the bus is taken as an example.

The memory 702 may be configured to store a software program and module. The processor 701 runs the software program and module stored in the memory 702, to perform various functional applications and data processing of the tutorial-based multimedia resource editing device. The memory 702 may mainly include a program memory area and a data memory area. An operating system, an application required by at least one function and the like are stored in the program memory area. In addition, the memory 702 may include a high-speed random access memory, and may further include a non-volatile memory, such as at least one disk storage device, a flash device or other volatile solid-state storage device. The input apparatus 703 may be configured to receive inputted number or character information, and generate a signal related to user settings and function control of the tutorial-based multimedia resource editing device.

In the embodiment, the processor 701 may load an executable file corresponding to the processes of one or more application programs into the memory 702 in response to an instruction. The processor 701 runs the application programs stored in the memory 702, thereby realizing various functions in the above tutorial-based multimedia resource editing device.

It should be noted that the relationship terms "first", "second" and the like herein are used for distinguishing an entity or operation from another entity or operation, but not intended to necessitate or imply an actual relationship or order between these entities or operations. Further, the terms "include", "comprise" or any variant thereof are intended to encompass nonexclusive inclusion such that a process, method, article or device including a series of elements includes not only those elements but also other elements which have not been listed definitely or an element(s) inherent to the process, method, article or device. Unless expressively limited otherwise, a process, method, article or device limited by "comprising/including a(n) ..." does not exclude existence of another identical element in such process, method, article or device.

The above are only specific implementations of the present disclosure, such that those skilled in the art can understand or implement the present disclosure. It is obvious for those skilled in the art to make many modifications to these embodiments. The general principle defined herein may be applied to other embodiments without departing from the spirit or scope of the present disclosure. Therefore, the present disclosure is not limited to the embodiments illustrated herein, rather, should be defined by the broadest scope consistent with the principle and novel features disclosed herein.

## Claims

1. A method for editing multimedia resource based on a tutorial, comprising:
acquiring a tutorial video; and
playing the tutorial video on a resource editing page in a form of a floating window; wherein the tutorial video is configured to instruct a user to perform an editing operation on an imported multimedia resource on the resource editing page.

2. The method according to claim 1, wherein before the playing the tutorial video on the resource editing page in the form of the floating window, the method further comprises:
jumping from a tutorial playing page to the resource editing page, in response to a trigger operation for an editing entry on the tutorial playing page.

3. The method according to claim 2, wherein before the jumping from the tutorial playing page to the resource editing page, the method further comprises:
displaying a material source selection window, in response to the trigger operation for the editing entry on the tutorial playing page;
downloading a first material associated with the tutorial video, in a case that a selection operation for a tutorial-associated material on the material source selection window is received, and importing the first material into the resource editing page; and
importing a second material selected from user personal resource into the resource editing page, in a case that a selection operation for the user personal resource on the material source selection window is received.

4. The method according to claim 2, wherein before the jumping from the tutorial playing page to the resource editing page, the method further comprises:
jumping from the tutorial playing page to a display page of user personal resource, in response to the trigger operation for the editing entry on the tutorial playing page; and
importing at least one material into the resource editing page, in response to a selection operation for the at least one material on the display page of user personal resource.

5. The method according to claim 1, wherein after the playing the tutorial video on the resource editing page in the form of the floating window, the method further comprises:
zooming in on the floating window on the resource editing page in response to a zoom-in operation for the floating window or zooming out on the floating window on the resource editing page in response to a zoom-out operation for the floating window; or
displaying the floating window in a preset area corresponding to a dragging direction of a dragging operation on the resource editing page in response to the dragging operation for the floating window, wherein the preset area is independent from a display area of an editing control on the resource editing page.

6. The method according to claim 1, wherein the tutorial video includes a first video clip and a second video clip adjacent to each other, and the method further comprises:
detecting whether an editing operation indicated by the first video clip is completed on the resource editing page, in a process of playing the first video clip; and
playing the second video clip, in response to detecting that the editing operation indicated by the first video clip has been completed on the resource editing page.

7. The method according to claim 6, wherein the detecting whether the editing operation indicated by the first video clip is completed on the resource editing page in the process of playing the first video clip comprises:
detecting whether a preset operation in the editing operation indicated by the first video clip is completed on the resource editing page, in the process of playing the first video clip.

8. The method according to claim 1, wherein after the playing the tutorial video on the resource editing page in the form of the floating window, the method further comprises:
displaying a processing result corresponding to the multimedia resource in a user draft list, in response to an editing completion operation for the multimedia resource on the resource editing page, wherein the processing result carries a tutorial identifier, and the tutorial identifier is used to indicate that the processing result is generated based on a tutorial video.

9. An apparatus for editing multimedia resource based on a tutorial, comprising:
an acquisition module configured to acquire a tutorial video; and
a playing module configured to play the tutorial video on a resource editing page in a form of a floating window, wherein the tutorial video is used to instruct a user to perform an editing operation on an imported multimedia resource on the resource editing page.

10. A computer readable storage medium storing instructions, wherein the instructions when executed by a terminal device, cause the terminal device to implement the method according to any one of claims 1 to 8.

11. A device, comprising:
a memory;
a processor; and
a computer program stored in the memory and executable on the processor,
wherein when the computer program is executed by the processor, the processor implements the method according to any one of claims 1 to 8.
